# EUROPÄISCHE PATENTSCHRIFT

(11) **EP 3 710 383 B1**
(45) Veröffentlichungstag und Bekanntmachung des Hinweises auf die Patenterteilung: **21.02.2024**
(21) Anmeldenummer: 18804544.7
(22) Anmeldetag: 12.11.2018
(51) Int. Cl.: B65G 21/06, B65G 21/14, B65G 15/12, B65G 15/24, B65G 41/00

(54) **MODULARTIG AUFGEBAUTES TRANSPORTSYSTEM**
MODULAR TRANSPORT SYSTEM
SYSTÈME DE TRANSPORT MODULAIRE

(30) Priorität: 16.11.2017 DE 102017220449
(43) Veröffentlichungstag der Anmeldung: 23.09.2020
(73) Patentinhaber: Gea Food Solutions Germany GmbH, 35216 Biedenkopf-Wallau (DE)
(72) Erfinder: SCHAAFHAUSEN, Wilfried, 88045 Friedrichshafen (DE); GAHLER, Thomas, 87616 Marktoberdorf (DE)
(74) Vertreter: Kutzenberger Wolff & Partner
(86) Internationale Anmeldenummer: PCT/EP2018/080946
(87) Internationale Veröffentlichungsnummer: WO 2019/096741

(56) Entgegenhaltungen:
- EP-A1- 0 508 304
- EP-A2- 0 713 753
- WO-A1-2015/055687
- DE-A1-102010 050 524
- DE-T2- 69 816 561
- FR-A1- 2 979 104
- GB-A- 770 438
- US-A- 2 573 486
- US-A- 4 043 442
- US-A- 6 152 284
- US-A1- 2004 089 522

## Beschreibung

Die vorliegende Erfindung betrifft ein Transportsystem zum Transport von Produkten von einer Bearbeitungs- zu einer Weiterverarbeitungs-, insbesondere Verpackungsstation, mit mehreren sequentiellen Transportbändern, die mehrere Produkte in mehreren Spuren gleichzeitig transportieren.

Das gattungsgemäße Transportsystem ist aus dem Stand der Technik bekannt und wird beispielsweise in der Lebensmittelverarbeitung eingesetzt, um Lebensmittelportionen von einer Verarbeitungsvorrichtung, beispielsweise einem Slicer, zu einer Weiterverarbeitungsstation, insbesondere einer Verpackungsmaschine, zu transportieren. Diese Transportsysteme sind bisher immer aus einer Vielzahl von unterschiedlichen Einzelteilen hergestellt worden, was deren Herstellung und Wartung sehr aufwändig gemacht hat.

Das Dokument US 6 152 284 A offenbart ein Transportsystem nach dem Oberbegriff des Anspruchs 1.

Es ist die Aufgabe der vorliegenden Erfindung ein Transportsystem zur Verfügung zu stellen, das die Nachteile des Standes der Technik nicht aufweist.

Gelöst wird die Aufgabe mit einem Transportsystem nach Anspruch 1 zum Transport von Produkten von einer Bearbeitungs- zu einer Weiterverarbeitungs-, insbesondere Verpackungsstation, mit mehreren sequentiellen Transportbändern, die mehrere Produkte in mehreren Spuren gleichzeitig transportieren, wobei es mehrere sequentiell und parallel vorgesehene, - funktions- und/oder prinzipidentische, vorzugsweise baugleiche, Module aufweist, die durch die gegebenenfalls unterschiedlich langen Transportbänder miteinander verbunden sind.

Die vorllegende Erfindung betnttt ein Transportsystem nach Anspruch 1, zum Transport von Produkten, insbesondere Lebensmittelprodukten, von einer Bearbeltungs- zu einer vveiterverarbeitungs-, insbesondere Verpackungsstation. Eine Bearbeitungsstation ist beispielsweise ein Slicer, der einen Lebensmittelriegel in eine Vielzahl von Portionen zerteilt, die aus mindestens einer

Lebensmittelscheibe bestehen. Die Lebensmittelscheiben können gestapelt, geschindelt und/oder "geshaved" sein. Eine andere Bearbeitungsstation im Sinne der Erfindung ist beispielsweise ein Kutter, ein Fleischwolf, ein Ofen, ein Former, der aus einer formbaren Masse, beispielsweise Hackfleisch, geformte Produkte herstellt, ein Panierer und/oder eine Frittierer. Von derartigen Bearbeitungsstationen werden eine Vielzahl von Produkten an das erfindungsgemäße Transportsystem übergeben, das diese zu einer Weiterverarbeitungs-, insbesondere Verpackungsmaschine, transportiert, mit der die Produkte verpackt werden. Der Transport erfolgt dabei durch mehrere sequentiell und parallel, insbesondere übereinander, angeordnete Transportbänder. Außerdem werden mehrere Produkte in mehreren Spuren gleichzeitig auf den Transportbändern transportiert. Bei den Transportbändern handelt es sich vorzugsweise um ein Endlosband oder um eine Vielzahl von beabstandeten Transportriemen. Vorzugsweise ist das Transportband als Zahnriemengurt ausgeführt, um den Schlupf zwischen dem Transportband und dessen Antrieb zu vermindern.

Erfindungsgemäß weist das Transportsystem mehrere sequentiell und parallel vorgesehene Module auf, die mit gegebenenfalls unterschiedlich langen Transportbändern verbunden, ansonsten aber funktions- oder zumindest prinzipgleich, vorzugsweise baugleich sind und die in Transportrichtung hintereinander oder übereinander angeordnet sind. Durch den modulartigen Aufbau des erfindungsgemäßen Transportsystems ist dieses leicht zu errichten und leicht zu warten. Die Anzahl der unterschiedlichen Teile ist reduziert. Das erfindungsgemäße Transportsystem kann einfach verlängert oder verkürzt werden, indem ein Modul hinzugefügt oder entfernt und/oder ein oder mehrere Transportbänder verlängert oder verkürzt werden. Dazu werden die Module lediglich entlang des Rahmens verschoben. Jedes Modul weist vorzugsweise seinen eigenen Antrieb auf, der besonders bevorzugt unabhängig von den anderen Modulen gesteuert oder geregelt werden kann, wobei mehrere, vorzugsweise alle, Module vorzugsweise miteinander, synchronisiert sind. Ferner ist es möglich alternativ oder zusätzlich ein oder mehrere Modul(e) übereinander vorzusehen, die beispielsweise einer Wippe nachgeordnet sind. Dadurch können beispielsweise können Produkte in unterschiedliche Ströme getrennt, fehlerhafte Produkte beispielsweise ausgeschleust werden.

Erfindungsgemäß weist jedes Modul eine Antriebsrolle und eine Umlenkung und ein Spannsystem aut. Diese Bauteile sind vorzugsweise an einem gemeinsamen Träger angeordnet, der entlang eines Rahmens verschiebbar vorgesehen ist, wie weiter unten noch beschrieben wird. Mit der Antriebsrolle wird das Transportband, das zwei Module miteinander verbindet, angetrieben, vorzugsweise unabhängig von den anderen Transportbändern stromauf- oder stromabwärts. Mit jeder Umlenkung wird die Laufrichtung des Transportbandes verändert. Vorzugsweise befinden sich die eine oder beide Umlenkungen im Bereich der Antriebsrolle und besonders bevorzugt, bezogen auf die Richtung der Schwerkraft, mindestens eine Umlenkung oberhalb der Antriebsrolle. Vorzugsweise ist, bezogen auf die Transportrichtung der Produkte, die stromaufwärtige Umlenkung, wiederum bezogen auf die Richtung der Schwerkraft, zumindest teilweise oberhalb der stromabwärtigen Umlenkung angeordnet. Vorzugsweise ist das Transportband im Bereich mindestens einer Umlenkung luftgelagert. Dies kann beispielsweise dadurch realisiert werden, dass ein Gas, insbesondere Luft, aus dem Umfang der Umlenkung geblasen wird. Alternativ oder zusätzlich weist die Umlenkung eine Rolle auf, die luftgelagert sein kann, beispielsweise indem ein Luftpolster zwischen der Rolle und einer Lagerschale vorgesehen wird. Mindestens eine der beiden Rollen, insbesondere die stromaufwärtige kann relativ zu der anderen Umlenkung und/oder relativ zu der Antriebsrolle verschieblich vorgesehen sein, wobei die Verschiebungsrichtung vorzugsweise eine vertikale Komponente aufweist. Dadurch kann beispielsweise eine Wippe realisiert werden. Vorzugsweise wird diese Umlenkung entlang einer Führung bewegt, beispielsweise entlang einer Kulisse oder entlang eines Gestänges. Die Bewegung der Umlenkung wird vorzugsweise motorisch angetrieben.

Mit dem Spannsystem kann die Spannung des Transportbandes und/oder die Dicke des Luftpolsters zwischen der Umlenkung und dem Transportband und/oder des Luftlagers der Rolle eingestellt werden. Das Spannsystem kann beispielweise einen Exzenter aufweisen, der beispielsweise gegen die Innenseite des Transportbandes drückt. Das Spannsystem kann automatisch oder manuell betrieben werden.

Vorzugsweise sind die Umlenkung eines ersten Transportbandes und/oder die Umlenkung eines nachfolgenden Transportbandes und/oder der Antrieb des nachfolgenden Transportbandes an einem gemeinsamen Modul, insbesondere dessen Tragstruktur, angeordnet; d.h. an einem Modul sind zwei Transportbänder vorgesehen. Vorzugsweise sind die beiden Umlenkungen fest an einem gemeinsamen Träger vorgesehen oder eine Umlenkung ist fest und eine ist verschieblich ausgebildet, wobei im Fall der verschieblichen Ausbildung die Führung der Umlenkung während der Bewegung vorzugsweise wiederum fest mit dem Träger des Moduls verbunden ist. Durch diese bevorzugten oder besonders bevorzugten Ausführungsformen der vorliegenden Erfindung wird sichergestellt, dass der Spalt zwischen zwei Bändern immer gleichbleibt, auch wenn das Modul, beispielsweise entlang eines Rahmens verschoben wird.

Gemäß einer bevorzugten Ausführungsform weist das erfindungsgemäße Transportsystem mehrere Träger auf, die weiter unten noch detailliert beschreiben werden. Vorzugsweise ist an dem Träger ein Modul vorgesehen, insbesondere befestigt und kann falls gewünscht entlang des Trägers verschoben und in einer anderen Position mit dem Träger verbunden werden.

Vorzugsweise weist das Transportsystem einen Rahmen, bestehend aus mindestens einem Längsträger und Strukturelementen auf. Jeder Längsträger erstreckt sich parallel zu der Transportrichtung der Transportbänder. Die Längsträger sind vorzugsweise als Rohre, insbesondere Rundrohre, vorgesehen. Jedes Strukturelement und/oder die Träger ist/sind vorzugsweise durch reversiblen und/oder einstellbaren Form-, Kraft- und/oder Reibschluss an mindestens einem Längsträger angeordnet. Rundrohre, insbesondere in Verbindung mit einem reversiblen und/oder einstellbaren Form-, Kraft- und/oder Reibschluss haben den Vorteil, dass die Transportbänder leicht demontiert und/oder einfach von einer Gebrauchs- in eine Verstau- und/oder Reinigungsposition verbracht werden können, indem der Form-, Kraft- und/oder Reibschluss gelockert und die Träger der Module um die Längsträger gedreht werden. Der Form-, Kraft- und/oder Reibschluss kann beispielsweise durch eine Schelle, insbesondere zweigeteilte Schelle gestaltet werden, bei der durch mindestens eine Schraube oder einen Schnellverschluss die Klemmkraft eingestellt werden kann. Vorzugsweise sind das Strukturelement und/oder der Träger des Moduls entlang der Längsträger verschieblich vorgesehen. Dadurch können sie in die jeweils gewünschte Längslage und/oder den gewünschten Drehwinkel relativ zu dem Rohr, insbesondere dem Rundrohr, gebracht und in dieser Lage fixiert werden.

Vorzugsweise ist die Antriebsrolle durch eine angetriebene Welle, insbesondere durch einen Trommelmotor angetrieben. Diese Welle/Trommelmotor kann das Transportband insgesamt oder im Fall von Längsgeteilten Transportbänder nur einen Teil dieser Bänder antreiben.

Vorzugsweise ist die Antriebsrolle mit einer Oberfläche ausgestattet, die zu der Verzahnung der bevorzugt vorgesehenen Innenverzahnung des Transportbandes komplementär ist, so dass dessen Antrieb mittels Form- und/oder Kraftschluss erfolgt.

Gemäß einer bevorzugten Ausführungsform der vorliegenden Erfindung ist eingangsseitig ein Aufreihmodul und/oder ausgangsseitig ein Einlegemodul vorgesehen. Mit dem Aufreihmodul werden Produkte, die in mehreren Spuren in das Aufreihmodul einlaufen so relativ zueinander verschoben, dass sich am Ende des Aufreihmoduls die Produkte einer Reihe auf einer Linie befinden, die insbesondere senkrecht zu ihrer Transportrichtung verläuft. Das Aufreihmodul weist eine Vielzahl von parallelen Endlosriemen oder Endlosbändern auf, die zumindest abschnittsweise unabhängig voneinander so angetrieben werden können, dass das jeweilige Produkt in einer Spur so beschleunigt oder abgebremst werden kann, dass es sich am Ausgang des Aufreihbandes in einer Linie mit den anderen Produkten seiner Reihe befindet. Die Breite eines Endlosbandes kann für eine oder mehrere Spuren ausgelegt sein. Vorzugsweise befindet sich stromaufwärts von dem Aufreihband und/oder im Bereich des Aufreihbandes ein Sensor, der die Lage der Produkte einer Reihe zueinander erfasst. Mit dem Signal dieses Sensors wird dann der Antrieb des Transportbands/Transportriemen der einzelnen Spuren gesteuert.

Vorzugsweise weist das Aufreihmodul eine Vielzahl von Einzelmodulen auf, die jeweils zwei angetriebene Rollen und eine Umlenkung aufweisen, wobei die Umlenkung vorzugsweise stromabwärts von den Antriebsrollen vorgesehen ist. Vorzugsweise treibt eine Rolle eines Einzelmoduls nicht alle parallelen Transportbänder, sondern nur einen Teil davon an. Die restlichen parallelen Transportbänder werden von der anderen Rolle des Einzelmoduls und/oder einer Rolle eines anderen Einzelmoduls angetrieben. Vorzugsweise erstreckt sich mindestens eines der parallelen Transportbänder über mehr als ein Einzelmodul, wobei sich besonders bevorzugt keines der parallelen Transportbänder über die gesamte Transportlänge des Aufreihmoduls erstreckt. Ebenfalls bevorzugt lenkt eine Umlenkung eines Einzelmoduls nicht alle parallelen Transportbänder, sondern nur einen Teil davon um.

Vorzugsweise wird jede Rolle eines Einzelmoduls durch eine angetriebene Welle, insbesondere einen Trommelmotor, angetrieben, der sich innerhalb einer Rolle befindet, der aber nur einen Teil der Länge der Rolle antreibt. Für den restlichen Teil der Länge der Rolle, dient die Welle/Trommelmotor oder dessen Rotor als Drehachse. Dafür ist zwischen dem anzutreibenden Teil und die Welle/Trommelmotor vorzugsweise ein Drehmomentübertragungselement, beispielsweise eine Passfeder vorgesehen.

Vorzugsweise sind in dem Autreihmodul bei n Spuren n-2 parallele Endlosbänder vorgesehen.

Vorzugsweise sind die Endlosbänder in Bereich des Aufreihmoduls zumindest teilweise unterschiedlich lang.

Erfindungsgemäß weist die Antriebsrolle jedes Moduls eine Achse oder welle und eine Hülse auf, wobei die Hülse verschieblich entlang der Mittelachse der Achse oder Welle und die Hülse um eine vertikale Achse drehbar vorgesehen ist.

Gemäß diesem Gegenstand der vorliegenden Erfindung weist die Antriebsrolle eine Achse oder Welle auf, die beispielsweise durch den Trommelmotor gebildet wird. Am Umfang der Achse/Welle ist konzentrisch eine Hülse vorgesehen, die mit der Achse/Welle Drehmoment-übertragend, beispielweise mittels einer Passfeder und/oder einer Verzahnung verbunden sein kann. Die Hülse ist verschieblich entlang der Mittelachse der Achse/Welle vorgesehen. Dadurch kann beispielsweise der Abstand zwischen zwei parallelen Bändern verändert und/oder die Lage eines Bandes quer zu seiner Transportrichtung verändert werden. Vorzugsweise erfolgt das Verschieben der Hülse motorisch. Zusätzlich ist die Hülse um eine vertikale Achse drehbar vorgesehen. Damit kann der Winkel der Transportrichtung verändert werden. Durch diese erfindungsgemäße Ausführungsform kann somit der Abstand zwischen zwei Produkten verändert werden und/oder es können Produkte seitlich überlappend gebildet werden.

Im Folgenden wird die Erfindung anhand der Figuren 1 - 7 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt das erfindungsgemäße Loadersystem
- **Figur 2**: zeigt ein Element des Aufreibandes 18.
- **Figur 3**: zeigt ein zweites Beispiel des erfindungsgemäßen Verfahrens.
- **Figur 4**: zeigt die Einlaufrolle der Aufreihung 18.
- **Figur 5**: zeigt den Rahmen des Loadersystems
- **Figur 6**: zeigt das erfindungsgemäße Loadersystem in zwei Ansichten.
- **Figur 7**: zeigt die Verbindung zwischen zwei Modulen.
- **Figuren 8 - 12**: zeigen die Verschieblichkeit der Hülse entlang der Achse/Welle 2

Die Erfindung wird im unabhängigen Anspruch 1 definiert. Bevorzugte Ausführungsformen der Erfindung sind in den abhängigen Ansprüchen angegeben.

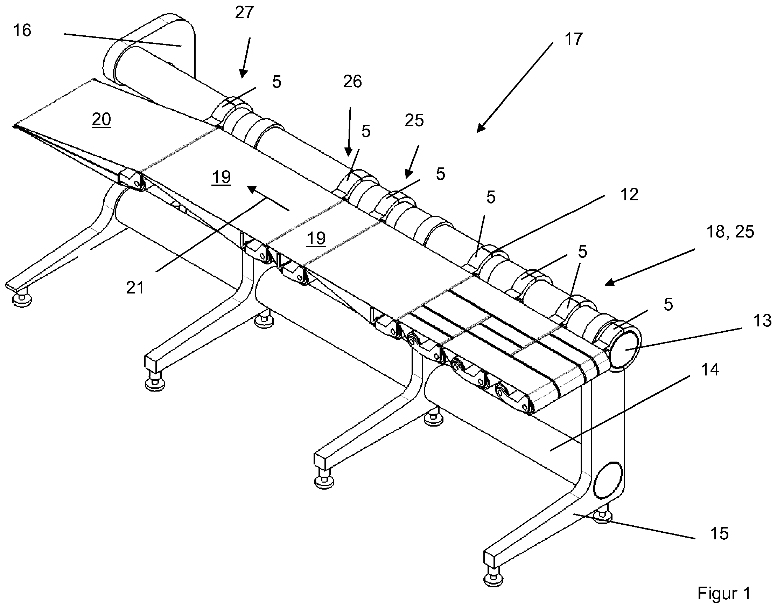

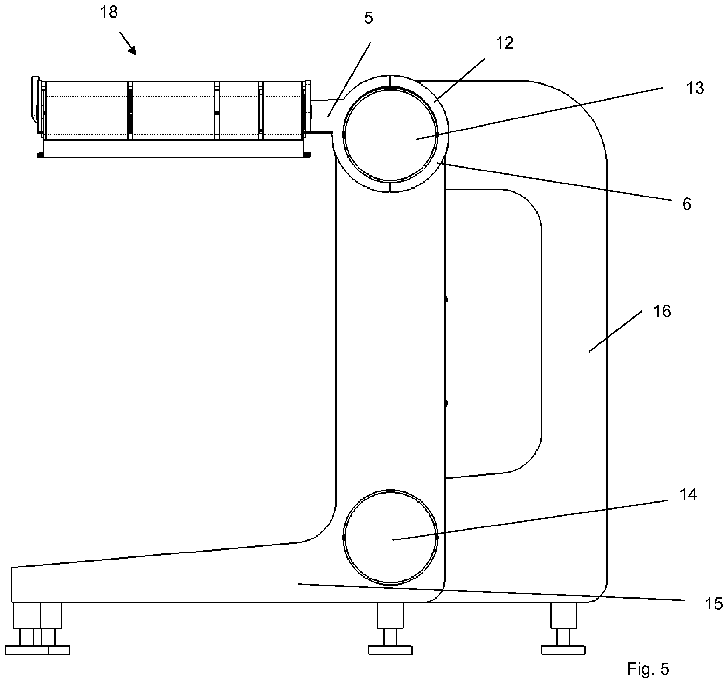

Die Figuren 1 und 5 - 7 zeigen das ertindungsgemäße Transportsystem 17, das zwischen einer Verarbeitungsvorrichtung, beispielsweise einem Slicer, und einer Weiterverarbeitungsvorrichtung, beispielsweise einer Verpackungsmaschine, vorgesehen ist. Das erfindungsgemäße Transportsystem 17 weist einen Rahmen auf, der über eine Mehrzahl von Strukturelementen 15 verfügt, die mittels mindestens einem, hier zwei, Längsträgern miteinander verbunden sind. Vorzugsweise sind die Strukturelemente 15 baugleich vorgesehen. Insbesondere im Bereich der Verarbeitungs- und/oder Weiterverarbeitungsvorrichtung können jedoch auch ein anderer Strukturträger, beispielsweise ein Strukturträger mit einer größeren Aussparung vorgesehen werden, um das erfindungsgemäße Transportsystem gut positionieren zu können. Jeder Längsträger 14 ist vorzugsweise als Rohr- insbesondere als Rundrohr, ausgebildet. Des Weiteren weist die erfindungsgemäße Vorrichtung eine Mehrzahl von Modulen 25, 26 auf, die jeweils an dem Rahmen, insbesondere an dem Längsträger 13 angeordnet sind. Dafür weist jedes Modul vorzugsweise eine Halterung 5 auf, die vorzugsweise mittels eines reversiblen Form- Kraft- und/oder Reibschluss mit dem Längsträger verbunden wird. In dem vorliegenden Fall wirkt die Halterung 5 mit einer Klemmung 6 zusammen, um das Modul an dem Längsträger zu befestigen. Vorzugsweise ist die Verbindung zwischen der Halterung 5 und dem Längsträger so veränderbar, dass die Halterung entlang des Längsträgers längsverschoben und/oder verdreht und in der neuen Position wieder fixiert werden kann. Dafür weist die Halterung im Bereich des Längsträgers 13 vorzugsweise eine Schelle auf, die angezogen bzw. gelöst werden kann. Durch die verschiebbare Verbindung der Halterung 5 mit dem Längsträger, kann das erfindungsgemäße Transportsystem ohne einen aufwändigen Umbau verlängert oder verkürzt werden.

In dem vorliegenden Fall weist das Transportsystem eingangsseitig ein Aufreihmodul 18, 25 auf, mit dem eingehende Produkte zu Formaten konfiguriert werden können. Ausgangsseitig ist in dem vorliegenden Fall ein Einlegemodul 20 vorgesehen, mit dem Produkte, die entlang des erfindungsgemäßen Transportsystems 17 transportiert worden sind, in Verpackungsmulden eingelegt werden können. Dafür kann das stromaufwärtige Ende des Einlegemoduls schwenkbar vorgesehen sein.

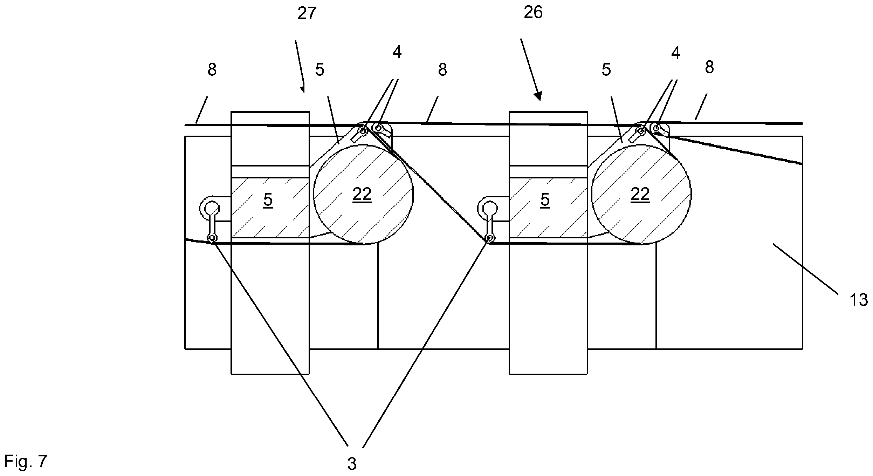

Figur 7 zeigt Details des erfindungsgemäßen Transportsystems. Das Transportsystem ist aus mehreren Modulen 26, 27 aufgebaut, die vorzugsweise entlang des Längsträgers in die gewünschte Position geschoben und dort fixiert werden können. Jedes Modul weist mindestens eine Antriebsrolle 22 und mindestens eine, hier zwei, Umlenkung(en) 4 auf, wobei jede Umlenkung 4 und die Antriebsrolle 22 an einem gemeinsamen Träger angeordnet sind. Das Transportband 8, das die Produkte transportiert, umschlingt zumindest die Antriebsrolle 22 des Moduls 26 und mindestens eine Umlenkung 4, die an einem stromaufwärtigen Modul 27 angeordnet ist. Durch eine Veränderung des Abstands zwischen den beiden Modulen 26, 27 kann in einfacher Weise die Transportlänge des Transportsystems verändert werden. Die Länge des Transportbandes wird dann auf den neuen Abstand angepasst, indem beispielsweise ein entsprechend langes Transportband 8 zur Verfügung gestellt wird. In dem vorliegen Fall weist jedes Modul zwei Umlenkungen 4 auf, die mit unterschiedlichen Transportbändern 8 zusammenwirken. Diese Ausführungsform der vorliegenden Erfindung hat den Vorteil, dass zwischen den Bändern ein definierter Spalt vorhanden ist, der auch beim Verschieben des Moduls erhalten bleibt. Zwischen den beiden Modulen 26, 27 kann ein Blech vorgesehen werden, insbesondere ein horizontales Blech, oder ein sonstiges Bauteil wie ein Gitter oder Streben. Dieses Bauteil, insbesondere das Blech, kann als Unterstützung für das zu transportierende Produkt dienen, insbesondere bei schweren Produkten und/oder bei großen Transportlängen. Optional weist jedes Modul ein Spannsystem 3 auf, mit dem der Transportgurt gespannt sein kann.

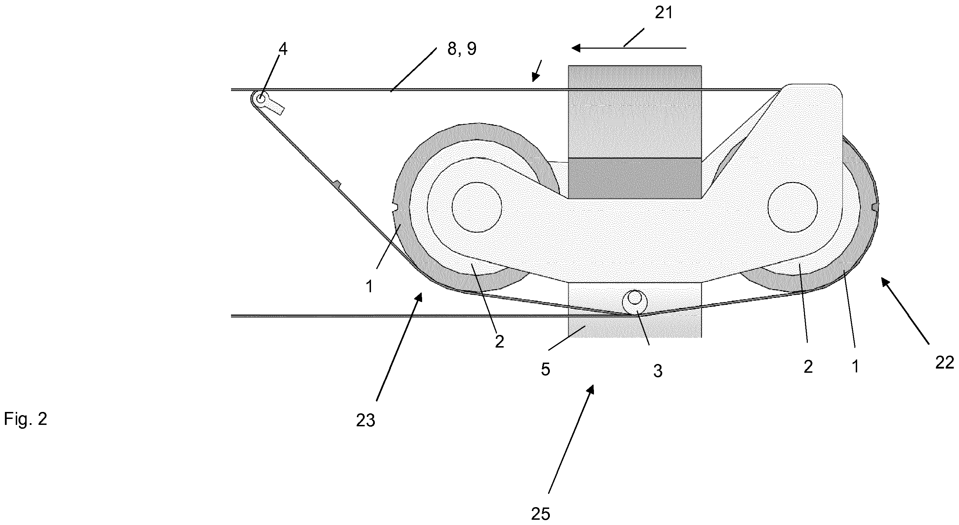

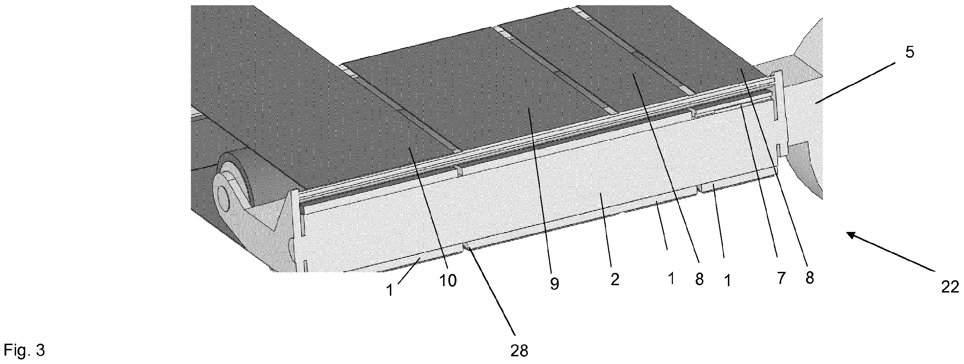

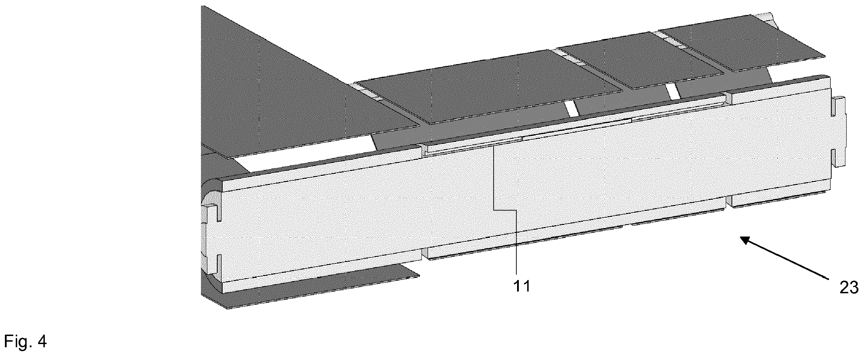

In den Figuren 1 - 6 ist das optional vorhandene Aufreihmodul 18, 25 zu sehen. Dieses weist in dem vorliegenden Fall sechs Spuren auf, d.h. sechs Produkte können parallel zueinander in die Transportrichtung 21 transportiert werden. Das Aufreihmodul weist mehrere hintereinander angeordnete Einzelmodule 24 auf, von denen eines in Figur 2 zu sehen ist. Jedes Einzelmodul weist zwei Antriebsrollen 22, 23 auf, die jeweils eine Hülse 1 und eine angetriebene Welle, hier einen Trommelmotor 2 aufweist. Beide Antriebsrollen 22, 23 sind vorzugsweise an demselben Träger 5 gelagert. Ferner weist jedes Einzelmodul eine Umlenkung 4 auf, die vorzugsweise stromabwärts, bezogen auf die Transportrichtung 21 von den Produkten angeordnet ist. Das Spannsystem 3 für das Transportband ist erfindungsgemäß vorgesehen. Jede Rolle 22, 23 jedes Einzelmoduls 25 treibt nicht alle Bänder aller Spuren an. Vorzugsweise treibt die Rolle 22 nur ein Transportband an und die Rolle 23 ein oder mehrere andere. Die anderen Spuren laufen lediglich um die jeweilige Rolle um, werden aber nicht von ihr angetrieben. Dafür kann die Hülse 1 der Rollen 22, 23 entlang eines Kreisring-förmigen Spaltes 28 in mehrere, mindestens zwei, zylinderförmige Teile geteilt sein, wobei nicht alle Teilzylinder angetrieben sind. Eine Möglichkeit des teilweisen Antriebs der Teilzylinder der Hülse ist in den Figuren 3 und 4 dargestellt, indem zwischen dem Teilzylinder und der angetriebenen Welle, hier dem Trommelmotor ein Drehmomentübertragungselement, hier eine Passfeder 7 vorgesehen ist, die das Drehmoment der Welle/des Trommelmotors 2 auf den Teilzylinder, der mit der ersten Spur 8 zusammenwirkt antreibt. In Figur 4 ist ein Drehmomentenübertragungsmittel 11 vorgesehen, das die Spuren zwei bis vier antreibt, während die Spuren eins, fünf und sechs von dieser Welle/Trommelmotor nicht angetrieben wird. Wie insbesondere Figur 2 entnommen werden kann, kann das Transportband 8 auf seiner Innenseite, die nicht mit den Produkten in Berührung kommt, Drehmomentenübertragungshilfen, hier Rippen, die sich quer zur Laufrichtung des Transportbandes erstrecken, aufweisen, die mit Zähnen, die am Umfang der Hülse/Rolle vorgesehen sind, zusammenwirken, um Schlupf zwischen dem Transportband und der Hülse/Rolle zu vermindern.

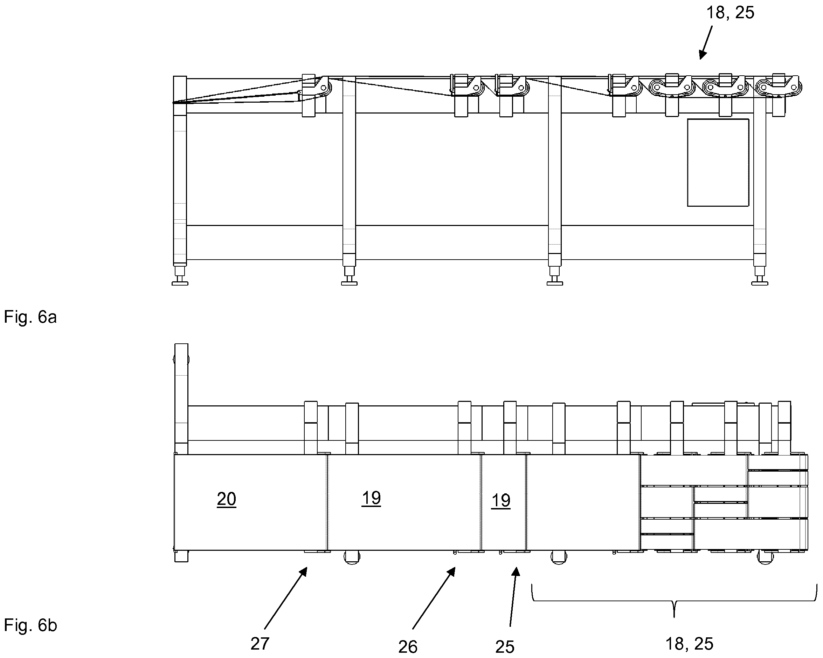

Wie insbesondere den Figuren 1 und 6b entnommen werden kann, sind die Transportbänder der einzelnen Spuren des Aufreihmoduls unterschiedlich lang und/oder innerhalb des Aufreihmoduls 18, 25 sind mehrere Transportbänder, die sich nur über eine oder zwei Spuren erstrecken. Die Umlenkung 4 eines Teilmoduls wirkt auch nicht mit allen Transportbändern aller Spuren zusammen, sondern immer nur mit einem Bruchteil. Vorzugsweise wirkt jede Umlenkung bei n Spuren gesamt mit n-2 Transportbändern zusammen. Bei n Spuren sind vorzugsweise n/2 Einzelmodule vorhanden. Vorzugsweise weist das Aufreihmodul als letztes Element ein Transportband auf, das so groß vorgesehen ist, dass es das gesamte jetzt korrekt aufgereihte Format aufnehmen kann.

Die Funktion des Aufreihmoduls 18, 25 wird anhand der Figuren 1, 3 und 4 erläutert. In dem vorliegenden Fall weist das Aufreihmodul sechs Spuren auf, d.h. es werden sechs Produkte parallel in Richtung des Aufreihmoduls transportiert. Der Fachmann erkennt, dass das Aufreihmodul aber auch mehr oder weniger Spuren aufweisen kann. In der Regel sind die Produkte, die in Richtung des Aufreihmoduls transportiert werden, nicht in einer Reihe, die senkrecht zur Transportrichtung der Produkte verläuft, angeordnet. Als erstes wird deshalb das Produkt in der Spur eins, die sich bei dem vorliegenden Beispiel ganz rechts befindet, relativ zu den anderen Produkten verändert, dafür wird das Transportband 8 beschleunigt oder abgebremst. Die Spuren zwei bis vier werden gemeinsam angetrieben und können ebenfalls relativ zu den Produkten in den Spuren eins, fünf oder sechs in ihrer Lage verändert werden, nicht aber untereinander. Dasselbe gilt für die Produkte in den Spuren fünf und sechs, deren Lage zueinander unverändert bleibt, die aber gemeinsam relativ zu den anderen Produkten abgebremst oder beschleunigt werden können. Als nächstes kann dann die Lage der Produkte in Spur drei und vier relativ zueinander verändert werden, indem beispielsweise die Spur drei individuell abgebremst oder beschleunigt wird. Als letztes wird die Lage der Produkte in Spur fünf und sechs relativ zueinander verändert. Die so fertiggestellte Reihe wird dann an das Letzte Band des Aufreihmoduls übergeben, dessen Transportgeschwindigkeit dann so bemessen wird, dass alle Reihen eines Formats den gewünschten Abstand haben.

Das Einlegemodul am hier am stromaufwärtigen Ende des Transportsystems weist eine Antriebrolle und eine Umlenkung auf, zwischen denen beispielsweise eine Platte oder ein Gitter als Abstandshalter und/oder als Unterstützung vorgesehen ist. Die Umlenkung am vorderen Ende des Einlegemoduls kann, insbesondere um die Drehachse der Antriebsrolle geschwenkt werden. Ein ähnliches Modul kann sich auch zwischen zwei Modulen des Transportbandes befinden, um Produkte von einer Ebene auf eine andere Ebene zu transportieren, beispielsweise zur Klassierung von Produkten.

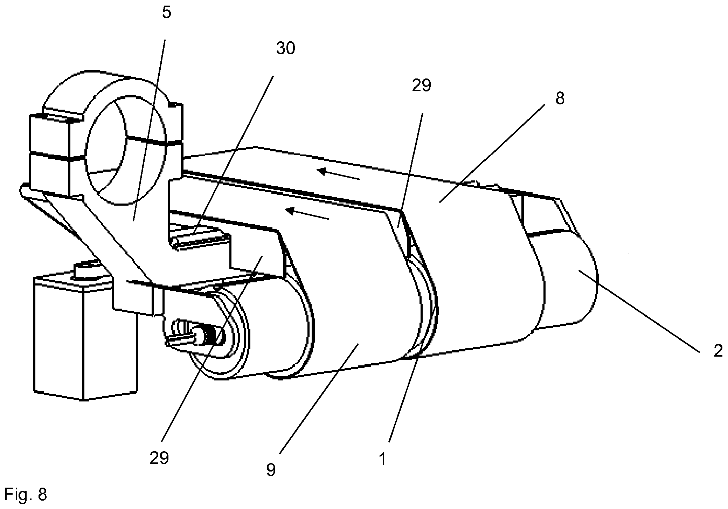

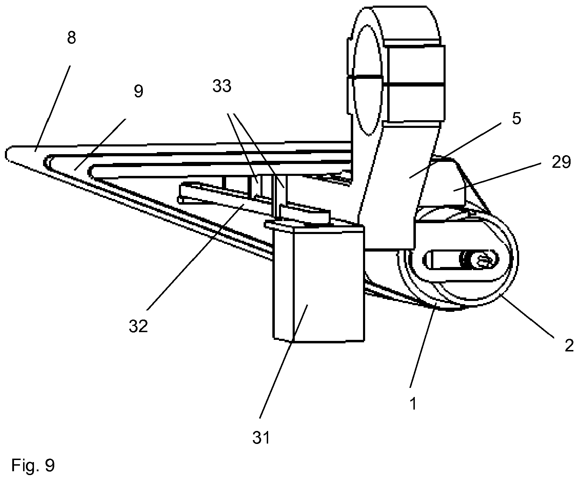

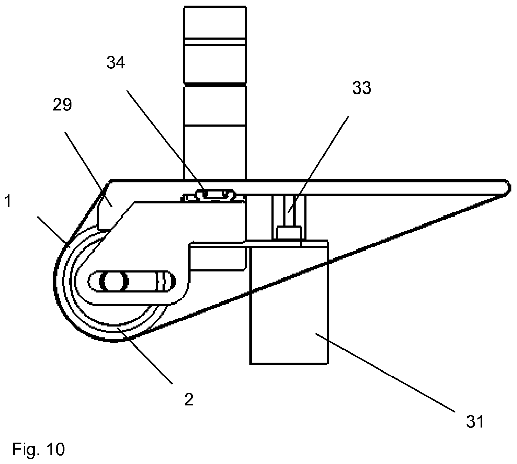

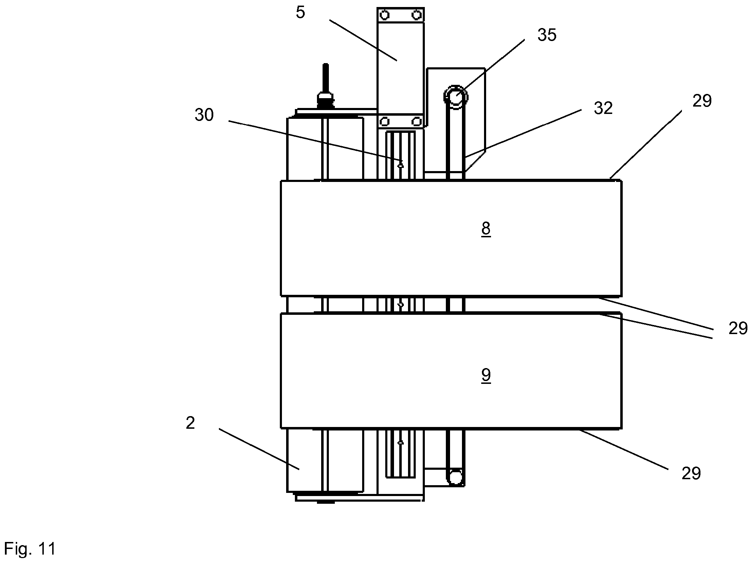

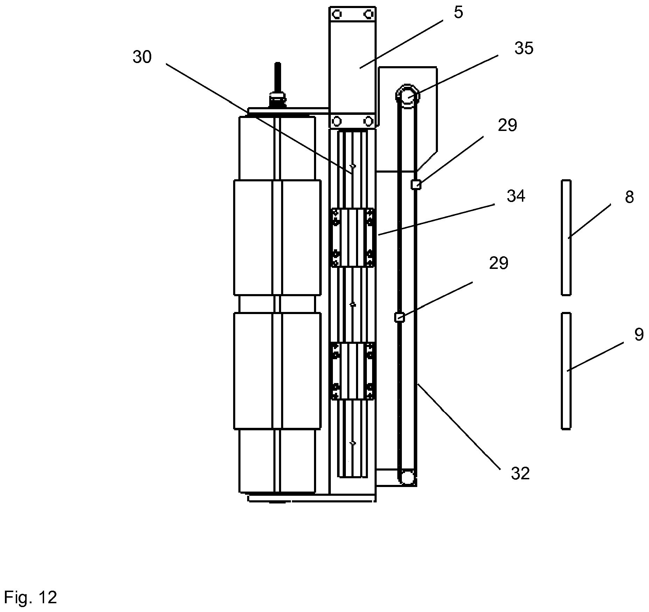

Die Figuren 8 - 12 zeigen eine Ausführungsform, bei der eine Hülse 1 auf einer Achse oder Welle 2 verschieblich entlang deren Längsachse vorgesehen ist. Die Hülse kann drehfest mit der Welle verbunden sein. Auf dem äußeren Umfang der Rolle läuft jeweils ein Transportband um. Durch eine Längsverschiebung der Hülse 1 kann der Abstand zwischen den Transportbändern 8, 9 verändert werden und/oder die Transportbänder können gemeinsam quer zur Transportrichtung der Transportbänder 8, 9 verschoben werden. Die Verschiebung der Hülsen 1 und damit der Transportbänder 8, 9 erfolgt vorzugsweise motorisch. Dafür sind Mitnehmer 29 vorgesehen, die an der jeweiligen Hülse angreifen und diese entlang der Welle/Achse 2 verschieben. Der gesamte Verschiebmechanismus und der dazugehörige Antrieb sind vorzugsweise mit der Halterung 5 verbunden. Wie insbesondere den Figuren 9 - 12 besteht der Antrieb und die Lagerung der Mitnehmer aus einem Motor 31, dessen Abtriebswelle 35 einen Zahnriemen 32 oder dergleichen antreibt, an dem mindestens ein Verbindungselement 33 angeordnet ist, das mit einem Schlitten 34 verbunden ist. Durch eine Bewegung des Zahnriemens 32 werden der oder die Schlitten entlang einer Führung 30 quer zur Transportrichtung der Förderbänder 8, 9 bewegt. An jedem Schlitten ist mindestens ein, vorzugsweise zwei Mitnehmer 29 vorgesehen, die die Hülsen 1 entlang der Achse Welle 2 verschieben. Vorzugsweise erstrecken sich die Mitnehmer 29 über die gesamte Länge des jeweiligen Transportbandes, so dass beide Umlaufrollen eines Transportbandes gleichzeitig quer zur Transportrichtung des Transportbandes verschoben werden können. Erfindungsgemäß ist die Hülse zudem um eine vertikale Achse drehbar vorgesehen.

In dem vorliegenden Beispiel sind zwei Verbindungselemente 33 an einem Transportband angeordnet, die in dem vorliegenden Fall so vorgesehen sind, dass die beiden Transportbänder 8, 9 gegenläufig zueinander verschoben werden können. Die beiden Transportbänder werden also entweder aufeinander zu oder voneinander weg bewegt. Es ist aber auch möglich, zwei Bänder mit einem konstanten Abstand quer zur Laufrichtung der Transportbänder zu verschieben. Alternativ oder zusätzlich ist es auch möglich, mindestens ein Transportband oder mehrere Transportbänder unabhängig voneinander quer zur Transportrichtung der Transportbänder anzutreiben.

### Bezugszeichenliste:

- 1: Hülse, Kunststoff-Hülse (verschiedene Breiten) mit Verzahnung
- 2: Achse, Welle, Trommelmotor
- 3: Spannsystem, Exzenter-Spannsystem
- 4: Umlenkung der Riemen
- 5: Halterung der Module bzw. Einzelmodule,
- 6: Klemmung
- 7: Mitnahme-Passfeder nur für eine Spur 1
- 8: Transportband, Zahnriemen, Zahnriemen-Gurt für eine Spur
- 9: Transportband, Zahnriemen-Gurt für 2 Spuren, hier Spur 3 und 4
- 10: Transportband, Zahnriemen-Gurt, hier für Spur 5 und 6, angetrieben vom nachfolgenden Modul
- 11: Mitnahme-Passfeder für Spur 2-4
- 12: Klemmung des Moduls am Aufnahmerohr
- 13: Längsträger, insbesondere für Module
- 14: Längsträger
- 15: Strukturelement
- 16: Strukturelement mit Aussparung
- 17: Transportsystem
- 18: Aufreihmodul, hier für sechs Spuren
- 19: Transportband
- 20: Einlegeband
- 21: Transportrichtung
- 22: Antriebsrolle, erste Antriebsrolle
- 23: zweite Antriebsrolle
- 24: Einzelmodul
- 25: Aufreihmodul
- 26: Modul
- 27: Modul
- 28: Ringförmiger Spalt
- 29: Mitnehmer
- 30: Führung für Schlitten
- 31: Motor
- 32: Getriebe, Riementrieb
- 33: Verbindung. Steg
- 34: Schlitten
- 35: Abtriebswelle des Motors

## Patentansprüche

1. Transportsystem (17) zum Transport von Produkten von einer Bearbeitungs- zu einer Weiterverarbeitungs-, insbesondere Verpackungsstation, mit mehreren sequentiellen Transportbändern (19, 20), die mehrere Produkte in mehreren Spuren, gleichzeitig sowie parallel zueinander transportieren, wobei es mehrere sequentiell und parallel vorgesehene, funktions- und/oder prinzipidentische, vorzugsweise baugleiche, Module (25, 26) aufweist, die durch die gegebenenfalls unterschiedlich langen Transportbänder (19, 20) miteinander verbunden sind, wobei jedes Modul (25, 26) eine Antriebsrolle (22) und eine Umlenkung (4) aufweist und die Antriebsrolle (22) eine Achse oder Welle (2) und eine Hülse (1) aufweist, wobei die Hülse entlang der Mittelachse der Achse oder Welle (2) verschieblich vorgesehen ist, **dadurch gekennzeichnet, dass** jedes Modul (25, 26) ein Spannsystem (3) aufweist und dass die Hülse (1) um eine vertikale Achse drehbar vorgesehen ist.

2. Transportsystem (17) nach Anspruch 1, **dadurch gekennzeichnet, dass** die Umlenkung (4) eines ersten Transportbandes und die Umlenkung und/oder der Antrieb eines nachfolgenden Transportbandes an einem gemeinsamen Modul (25, 26, 27) angeordnet sind.

3. Transportsystem (17) nach Anspruch 2, **dadurch gekennzeichnet, dass** es einen Träger aufweist, an dem ein Modul (25, 26, 27) vorgesehen ist.

4. Transportsystem (17) nach einem der voranstehenden Ansprüche, **dadurch gekennzeichnet, dass** es einen Rahmen bestehend aus mindestens zwei Längsträgern, insbesondere Rohren (13, 14) und Strukturelementen (15, 16) aufweist.

5. Transportsystem (17) nach Anspruch 5, **dadurch gekennzeichnet, dass** die Strukturelemente und/oder die Träger klemmbar an mindestens einem Längsträger (13) angeordnet sind.

6. Transportsystem (17) nach einem der voranstehenden Ansprüche, **dadurch gekennzeichnet, dass** die Antriebsrolle (22) durch einen Trommelmotor (2) angetrieben ist.

7. Transportsystem (17) nach einem der vorangehenden Ansprüche, **dadurch gekennzeichnet, dass** es eingangsseitig ein Aufreihmodul (18, 24) und/oder ausgangsseitig ein Einlegemodul aufweist.

8. Transportsystem (17) nach Anspruch 7, **dadurch gekennzeichnet, dass** das Aufreihmodul (18, 24) mehrere parallel angeordnete Bänder (8 - 10) aufweist, die jeweils um zwei Antriebsrollen (22, 23) und eine Umlenkung (4) umlaufen.

9. Transportsystem (17) nach einem der Ansprüche 7 oder 8, **dadurch gekennzeichnet, dass** an einem Träger (5) jeweils zwei Antriebsrollen (22, 23) angeordnet sind.

10. Transportsystem (17) nach einem der Ansprüche 8 oder 9 **dadurch gekennzeichnet, dass** eine Rolle (22) nur ein einziges der parallelen Bänder antreibt.

## Claims

1. Transport system (17) for transporting products from a processing station to a further processing station, in particular packing station, having a plurality of sequential conveyor belts (19, 20) which transport a plurality of products simultaneously in a plurality of tracks and in parallel, wherein said transport system has a plurality of modules (25, 26) which are identical in terms of function and/or principle, preferably of identical design, which are provided sequentially and in parallel and are connected to one another by the conveyor belts (19, 20) of optionally dissimilar lengths, wherein each module (25, 26) has a drive roller (22) and a deflection (4), and the drive roller (22) has an axle or shaft (2) and a sleeve (1), wherein the sleeve is provided so as to be displaceable along the central axis of the axle or shaft (2), **characterized in that** each module (25, 26) has a tensioning system (3), and **in that** the sleeve (1) is provided so as to be rotatable about a vertical axis.

2. Transport system (17) according to Claim 1, **characterized in that** the deflection (4) of a first conveyor belt and the deflection and/or the drive of a subsequent conveyor belt are disposed on a common module (25, 26, 27) .

3. Transport system (17) according to Claim 2, **characterized in that** said it has a support on which a module (25, 26, 27) is provided.

4. Transport system (17) according to one of the preceding claims, **characterized in that** it has a frame which is composed of at least two longitudinal members, in particular tubes (13, 14), and structural elements (15, 16).

5. Transport system (17) according to Claim 5, **characterized in that** the structural elements and/or the supports are disposed so as to be able to be clamped to at least one longitudinal member (13).

6. Transport system (17) according to one of the preceding claims, **characterized in that** the drive roller (22) is driven by a drum motor (2).

7. Transport system (17) according to one of the preceding claims, **characterized in that** it has a lining-up module (18, 24) on the input side and/or has an inserting module on the output side.

8. Transport system (17) according to Claim 7, **characterized in that** the lining-up module (18, 24) has a plurality of belts (8-10) which are disposed in parallel and revolve in each case about two drive rollers (22, 23) and one deflection (4).

9. Transport system (17) according to either of Claims 7 and 8, **characterized in that** two drive rollers (22, 23) are disposed in each case on one support (5) .

10. Transport system (17) according to either of Claims 8 and 9, **characterized in that** one roller (22) drives only a single one of the parallel belts.

## Revendications

1. Système de transport (17) servant au transport de produits d'un poste de traitement à un poste de traitement ultérieur, en particulier un poste d'emballage, comportant plusieurs bandes transporteuse séquentielles (19, 20), qui transportent plusieurs produits sur plusieurs voies, simultanément ainsi que parallèlement les uns aux autres, celui-ci présentant plusieurs modules (25, 26) prévus séquentiellement et parallèlement, de fonctionnement et/ou de principe identique(s), de préférence de construction identique, lesquels modules sont reliés les uns aux autres par le biais des bandes transporteuse (19, 20) éventuellement de longueurs différentes, chaque module (25, 26) présentant une poulie d'entraînement (22) et un renvoi (4) et la poulie d'entraînement (22) présentant un axe ou un arbre (2) et une douille (1), la douille étant prévue de manière mobile le long de l'axe médian de l'axe ou de l'arbre (2), **caractérisé en ce que** chaque module (25, 26) présente un système de serrage (3) et **en ce que** la douille (1) est prévue rotative autour d'un axe vertical.

2. Système de transport (17) selon la revendication 1, **caractérisé en ce que** le renvoi (4) d'une première bande transporteuse et le renvoi et/ou l'entraînement d'une bande transporteuse suivante sont disposés au niveau d'un module commun (25, 26, 27).

3. Système de transport (17) selon la revendication 2, **caractérisé en ce qu'**il présente un support au niveau duquel un module (25, 26, 27) est prévu.

4. Système de transport (17) selon l'une des revendications précédentes, **caractérisé en ce qu'**il présente un cadre constitué d'au moins deux longerons, en particulier de tubes (13, 14) et d'éléments structuraux (15, 16).

5. Système de transport (17) selon la revendication 5, **caractérisé en ce que** les éléments structuraux et/ou les supports sont disposés de manière à pouvoir être serrés sur au moins un longeron (13).

6. Système de transport (17) selon l'une des revendications précédentes, **caractérisé en ce que** la poulie d'entraînement (22) est entraînée par le biais d'un tambour moteur (2).

7. Système de transport (17) selon l'une des revendications précédentes, **caractérisé en ce qu'**il présente, côté entrée, un module d'alignement (18, 24) et/ou, côté sortie, un module insertion.

8. Système de transport (17) selon la revendication 7, **caractérisé en ce que** le module d'alignement (18, 24) présente plusieurs bandes (8-10) disposées parallèlement, lesquelles circulent respectivement autour de deux poulies d'entraînement (22, 23) et d'un renvoi (4).

9. Système de transport (17) selon l'une des revendications 7 ou 8, **caractérisé en ce que** deux poulies d'entraînement (22, 23) sont disposées respectivement au niveau d'un support (5).

10. Système de transport (17) selon l'une des revendications 8 ou 9, **caractérisé en ce qu'**une poulie (22) n'entraîne qu'une seule des bandes parallèles.
